# EUROPÄISCHE PATENTANMELDUNG

(11) **EP 0 963 031 A2**
(43) Veröffentlichungstag der Anmeldung: **08.12.1999**
(21) Anmeldenummer: 99110603.0
(22) Anmeldetag: 02.06.1999
(51) Int. Cl.: H02K 15/06

(54) **Verfahren und Einziehwerkzeugteil zum Herstellen eines Stators für elektrische Maschinen**

(30) Priorität: 04.06.1998 DE 19824920
(71) Anmelder: STATOMAT SPEZIALMASCHINEN GMBH, D-61138 Niederdorfelden (DE)
(72) Erfinder: Simon, Bernhard, 63579 Freigericht (DE)
(74) Vertreter: Jochem, Bernd, Dipl.-Wirtsch.-Ing.

(57) **Zusammenfassung**

Es wird ein Verfahren zum Herstellen eines Stators für elektrische Maschinen beschrieben, bei dem eine Vielzahl von Spulen (10) vorgewickelt und in ein Statorblechpaket eingezogen wird. Anschließend werden die Drahtenden (14) der Spulen (10) in vorbestimmter Lage festgelegt. Um die Drahtenden zuverlässiger und schneller als bisher verschalten oder an den vorgesehenen Terminals oder Hilfsterminals festlegen zu können, wird vorgeschlagen, daß sie jeweils unmittelbar nach dem Wickeln einer Spule (10) oder Spulengruppe vorübergehend mit einem Halteorgan (34) verbunden werden, diese Verbindung dann während des Einziehens der Spulen (10) in das Statorblechpaket bestehen bleibt, und anschließend die Drahtenden (14) maschinell in die vorbestimmte Lage überführt werden.

## Beschreibung

Die Erfindung betrifft ein Verfahren zum Herstellen eines Stators für elektrische Maschinen, bei dem eine Vielzahl von Spulen vorgewickelt und in ein Statorblechpaket eingezogen wird und vor dem Einziehen die Drahtenden der Spulen in einer bestimmten, vor-ausgerichteten Stellung vorübergehend mit einem vom Statorblechpaket getrennten Halterorgan verbunden und nach dem Einziehen in vorbestimmter Lage relativ zum Statorblechpaket festgelegt werden.

Es ist allgemein üblich, die bereits jeweils am Ende des Wickelvorgangs der Spulen oder Spulengruppen durch das Abschneiden vom Drahtvorrat vorhandenen Drahtenden erst nach dem Einziehen aller Spulen in das Statorblechpaket unmittelbar vor dem Festlegen an bestimmten Terminals oder Hilfsterminals zu ergreifen. Bei Statoren mit niedriger Polzahl bereitet das Erfassen und Festlegen der Drahtenden keine Schwierigkeiten und kann weitgehend fehlerfrei ausgeführt werden, weil gut erkennbar ist, zu welcher Spule ein bestimmtes Drahtende gehört. Bei hochpoligen Statoren mit z. B. 72 Spulen sind jedoch 144 Drahtenden vorhanden, die sich oft kreuzen und nur in mühsamer, langwieriger Handarbeit geordnet und durch Verschaltung oder an Terminals oder Hilfsterminals festgelegt werden können.

Aus der US-PS 5,542,456 ist es bekannt, die Drahtenden zunächst an Halteeinrichtungen festzulegen, die mit einem als Spulenaufnehmer dienenden Teil des Einziehwerkzeugs verbunden sind. Während des Einziehvorgangs erfolgt dann eine maschinelle Übergabe der Drahtenden an weitere Halteeinrichtungen, die mit dem Statorblechpaket verbunden sind. Erst in einem weiteren maschinellen Übergabevorgang werden die Drahtenden schließlich in die vorbestimmte, relativ zum Stator festgelegte Position gebracht. Insbesondere bei dünnen Drähten und automatischen Produktionsverfahren stellt die Übergabe der Drahtenden während des Einziehvorgangs ein zusätzliches Risiko dar.

Die DE 31 14 407 C2 beschreibt ein bisher nicht praktiziertes Einziehverfahren, bei dem die Spulen von oben nach unten in ein Statorblechpaket eingezogen werden. Dieses ist an seiner oberen Endfläche mit einem Ring verbunden, an dem bereits im Zusammenhang mit dem Wickeln der Spulen die Drahtenden festgelegt werden. Ein solcher Ring hat den Nachteil, daß er das Bandagieren der Wicklungsköpfe behindert. Das ungewöhnliche Einziehverfahren ist außerdem darauf angewiesen, daß die auf einer Schablone erzeugten Spulen zunächst von einem aus ringförmig angeordneten Stäben bestehenden Werkzeugteil aufgenommen und von dort zwischen die Lamellen des Einziehwerkzeugs überführt werden müssen. Bei automatischen Produktionsverfahren ist man jedoch bestrebt, die Spulenwindungen von der Schablone unmittelbar in die Spalte zwischen den Lamellen des Einziehwerkzeugs abzustreifen, um Fehlern und Drahtbeschädigungen bei der Übergabe der Drahtwindungen vorzubeugen.

Der Erfindung liegt die Aufgabe zugrunde, ein Verfahren und ein zu seiner Durchführung geeignetes Einziehwerkzeugteil zu schaffen, mit deren Hilfe die Drahtenden der Spulen, unabhängig davon, ob sie von der Wickelschablone in ein Übertragungs- oder Einziehwerkzeug abgestreift werden, zuverlässiger und schneller als bisher verschaltet und an den vorgesehenen Terminals oder Hilfsterminals festgelegt werden können.

Vorstehende Aufgabe wird dadurch gelöst, daß die Drahtenden der Spulen während des Einziehens mit dem Halteorgan verbunden bleiben und nach dem Einziehen maschinell vom Halteorgan gelöst und in die vorbestimmte, relativ zum Statorblechpaket festgelegte Lage überführt werden.

Die Erfindung bietet den Vorteil, daß es verhältnismäßig einfach ist, im kontinuierlich fortschreitenden Fertigungsprozeß die Drahtenden jeweils unmittelbar im Zusammenhang mit dem Wickeln einer Spule oder Spulengruppe in einer bestimmten Stellung vorübergehend mit einem separaten Halteorgan zu verbinden und während des Einziehens der Spulen in das Statorblechpaket in Verbindung zu halten. Dieser Vorschlag beruht auf der Überlegung, daß am Ende jedes Wickelvorgangs die Drahtenden noch eine definierte Lage haben. Man sollte sie deshalb nicht erst loslassen und nach dem Einziehvorgang wieder mühsam einfangen, sondern sie über den Einziehvorgang und eine ggf. vorgenommene Formoperation zur Formung der Wicklungsköpfe hinweg geordnet halten. Voraussetzung dafür ist lediglich das erwähnte zusätzliche Halteorgan, mit dem die Drahtenden während des Einziehvorgangs und ggf. der Formoperation verbunden bleiben. Dafür genügt jedoch z. B. eine einfache scheibe oder Platte mit Halterungen bzw. Klemmstellen für die einzelnen Drahtenden am Umfang, die ohne das Statorblechpaket auf das mit ringförmig angeordneten, parallelen Lamellen bzw. Stäben versehene Einziehwerkzeugteil oder ein Übertragungswerkzeug, das die Spulen nach dem Wickeln aufnimmt und bis zum Einziehen in das Statorblechpaket hält, aufsetzbar oder mit dem Einziehwerkzeugteil verbunden ist.

Es empfiehlt sich, nach dem Einziehen der Spulen das Statorblechpaket zu wenden, so daß sich nunmehr die das scheibenförmige Halteorgan bildende Auflageplatte oberhalb des Statorblechpakets befindet und abgehoben werden kann, und die Drahtenden vor oder nach dem Abheben maschinell zu erfassen und in die durch Terminals oder Hilfsterminals festgelegte Lage zu überführen oder miteinander zu verschalten. Das neue Verfahren läßt sich aber auch ohne Wenden des Statorblechpakets ausführen.

In der bevorzugten praktischen Ausführungsform des Verfahrens werden die Spulen gemeinsam oder separat auf Stromdurchgang geprüft, während sich die Drahtenden noch in der vor-ausgerichteten Stellung befinden, z.B. vor oder während des Einziehens und/oder nach diesem Vorgang. Die Erfindung bietet damit die Möglichkeit, Draht- oder Isolierungsfehler an den Spulen bereits in einem frühen Stadium der Fertigung zu entdecken und dadurch Kosten zu sparen.

Ein zur Durchführung des erfindungsgemäßen Verfahrens vorgeschlagenes Einziehwerkzeugteil nimmt in herkömmlicher Weise auf einer Schablone gewickelte Spulenwindungen zwischen ringförmig angeordneten, parallelen Lamellen auf und ist mit einer Einziehvorrichtung kuppelbar, durch die die Spulen von den Lamellen in die Nuten eines Statorblechpakets abstreifbar sind, weist jedoch als Besonderheit eine Auflageplatte für die Spulen auf, an deren äußerem Umfang Halteeinrichtungen, die mit elektrischen Kontaktiermöglichkeiten versehen sein können, zur lösbaren Verbindung mit den Drahtenden der Spulen angebracht sind.

Nachfolgend werden Ausführungsbeispiele der Erfindung näher erläutert. Es zeigen:
- Fig. 1: eine vereinfachte Draufsicht auf ein Statorblechpaket nach dem herkömmlichen Einziehen einer Vielzahl von Spulen vor dem Ordnen und Festlegen der Drahtenden;
- Fig. 2: einen Axialschnitt durch ein unter einer nicht gezeigten Schablone positioniertes Einziehwerkzeugteil nach der Aufnahme vorgewickelter Spulen im axialen Längsschnitt;
- Fig. 2A: ein weiteres Ausführungsbeispiel eines Einziehwerkzeugteils;
- Fig. 2B: das Einziehwerkzeugteil nach Fig. 2A nach dem Aufsetzen auf eine Einziehvorrichtung;
- Fig. 3: das Einziehwerkzeugteil nach Fig. 2 nach dem Einziehen der Spulen in ein Statorblechpaket sowie dessen Wenden;
- Fig. 4: das gemäß Fig. 3 gewendete Statorblechpaket in der Phase des Anschlagens der Drahtenden an Hilfsterminals;
- Fig. 5: eine Draufsicht auf einen Stator, bei dem sämtliche Drahtenden der Spulen an Hilfsterminals festgelegt sind.

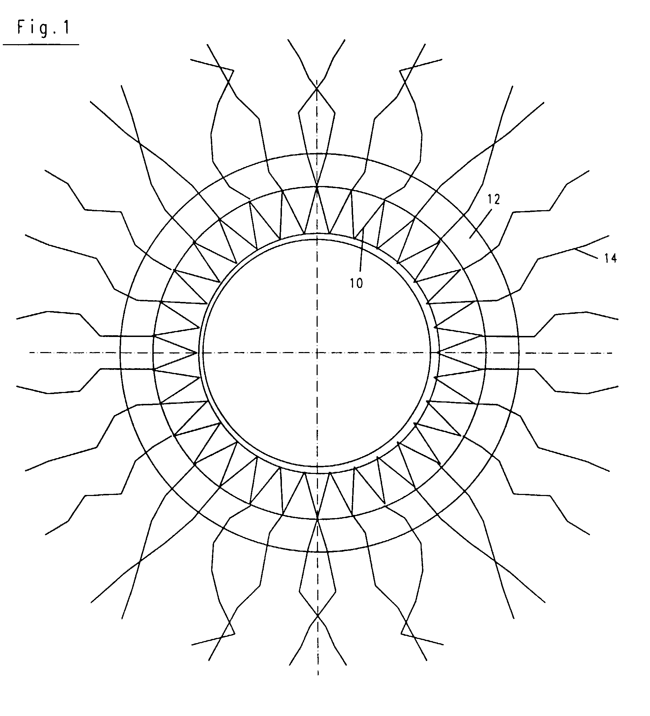

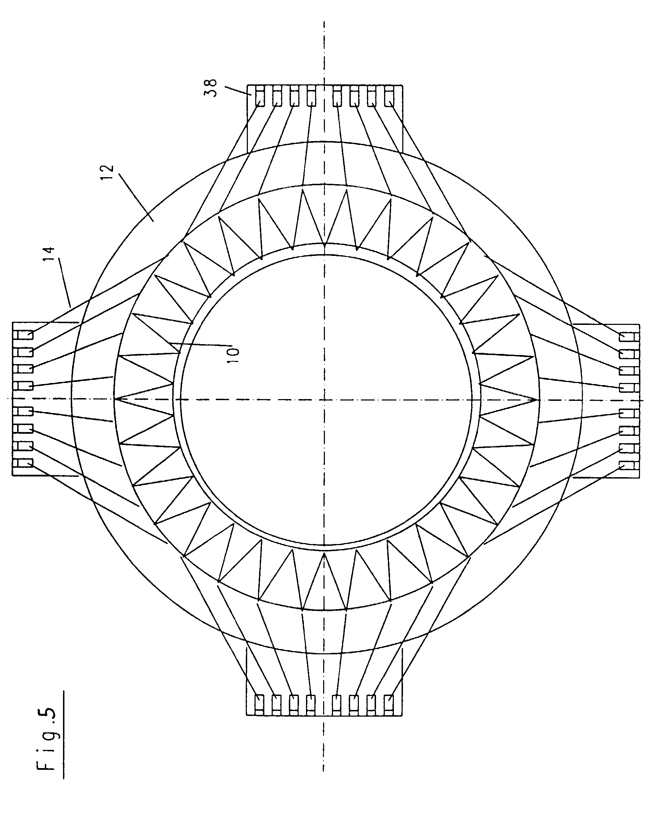

Die Darstellung nach Fig. 1 veranschaulicht das Problem, daß es nach dem herkömmlichen Einziehen vorgewickelter Spulen 10, die hier vereinfacht dargestellt sind, in ein Statorblechpaket 12 jedenfalls dann, wenn sehr viele Spulen bzw. Spulengruppen vorhanden sind, sehr schwierig ist, im Rahmen einer automatischen Fertigung die Drahtenden 14 der Spulen zu ergreifen und gemäß Fig. 5 jeweils an ganz bestimmten Terminals oder Hilfsterminals festzulegen oder für eine Verschaltung zu identifizieren.

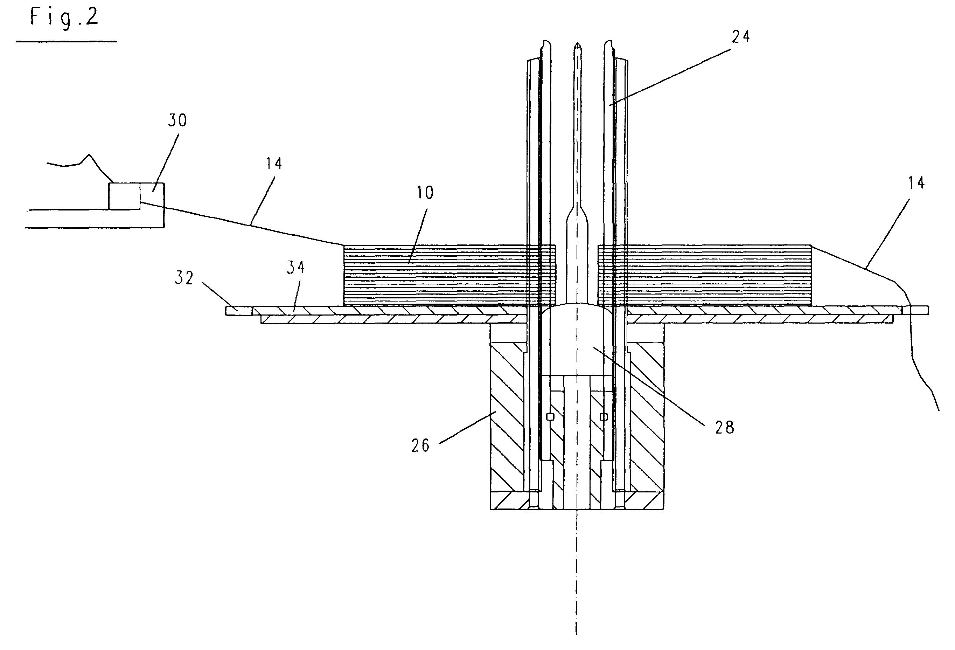

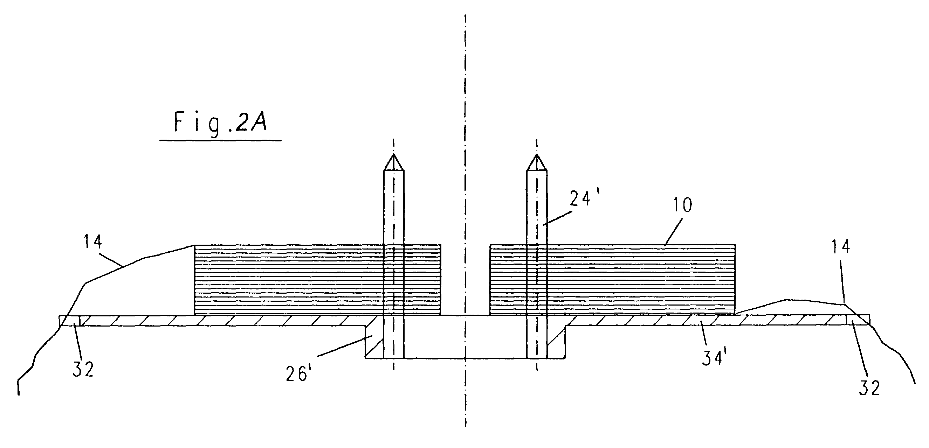

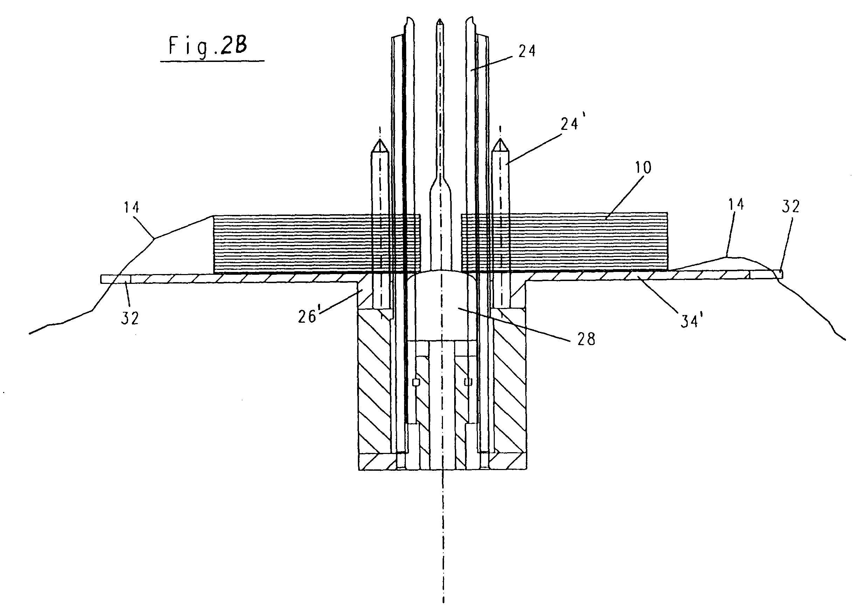

In den Figuren 2 bis 5 sind Stadien eines neuen Verfahrens dargestellt. Bei diesem beginnen die ersten Verfahrensschritte bereits unmittelbar nach dem wickeln einer Spule 10. Wie allgemein üblich, werden die Spulenwindungen während und/oder nach dem Wickeln des Drahtes auf eine nicht gezeigte Schablone von dieser nach unten abgestreift, wobei sie zwischen die ringförmig angeordneten, parallelen Stäbe oder Lamellen 24 eines insgesamt mit 26 bezeichneten Einziehwerkzeugteils fallen. Dieses Einziehwerkzeugteil kann ein sog. Einziehwerkzeugoberteil sein, das nach der Aufnahme der Spulen 10 mit dem Einziehwerkzeugunterteil einer Einziehvorrichtung verbunden und dann zum Einziehen der Spulen 10 in ein auf die Lamellen 24 aufgesetztes Statorblechpaket benutzt wird. Das Ausführungsbeispiel nach Fig. 2 zeigt ein solches vollständiges Einziehwerkzeugoberteil 26 mit einem sog. Einziehstern 28, der nach dem Kuppeln mit dem übrigen Teil der Einziehvorrichtung axial längs der Lamellen 24 vorgeschoben wird, dabei die Spulen 10 mitnimmt und in die Nuten des Statorblechpakets einzieht.

Alternativ könnte ein in Fig. 2A gezeigtes Einziehwerkzeugteil 26' auch eine einfache ringförmige Anordnung paralleler Stäbe 24' sein, die auf einem etwas größeren Radius als die Lamellen 24 des Einziehwerkzeugoberteils angeordnet und mit einer in der Mitte durchbrochenen Platte 34' verbunden sind. Ein solches sehr kostengünstig, ggf. aus Kunststoff, herzustellendes Einziehwerkzeugteil 26' nimmt zunächst gemäß Fig. 2A unter der Schablone die Spulen 10 auf und wird dann zur Einziehvorrichtung transportiert und dort gemäß Fig. 2B derart von oben aufgesetzt, daß deren Lamellen 24 von unten durch die mittlere Öffnung in der Grundplatte 34' und durch die nach radial innen von den Stäben 24' des einfachen Einziehwerkzeugteils 26' abstehenden Spulen 10 hindurchtreten. Es stört den Einziehvorgang nicht, daß das einfache, im wesentlichen als Übertragungswerkzeug dienende Einziehwerkzeugteil 26' während des Einziehvorgangs auf der Einziehvorrichtung sitzen bleibt. Während der ersten Phase des Einziehvorgangs wirken die Stäbe 24' zusammen mit den Lamellen 24 als Führungsorgane für die Drahtwindungen. Ein derartiges einfaches Übertragungs- und Einziehwerkzeugteil 26' ist in der deutschen Patentanmeldung 198 17 370.9 näher beschrieben.

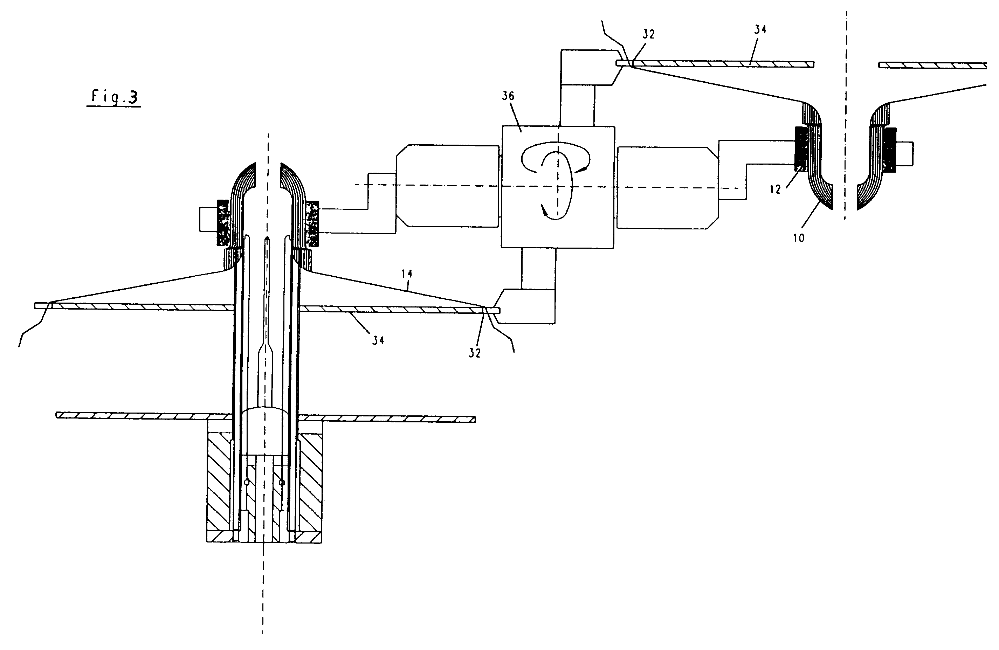

Zur Wickelvorrichtung, auf der die Spulen 10 vorgewickelt werden, gehören normalerweise in Fig. 2 gezeigte Greifer und Führungsorgane 30, die auch als Längenzieher bezeichnet werden und nach der Erzeugung der vorgesehenen Anzahl Spulenwindungen den sich in einer bestimmten Lage zwischen der Schablone und einer sie während der Wickelbewegung umkreisenden Draht-Austrittsdüse erfassen. Bei stillstehender Wickeldüse können die Längenzieher 30 mit dem geklemmt oder lose geführt gehaltenen Draht eine bestimmte Bewegung ausführen, die meistens dazu bestimmt ist, bestimmte Drahtlängen zwischen nacheinander gewickelten Spulen oder an den Enden der Spulen zu erhalten. Dieselben bereits vorhandenen Längenzieher bzw. Greif- und Führungsorgane lassen sich auch mit vorteil für die Zwecke der Erfindung nutzen. Da ihre Bewegungen steuerbar sind, können sie die Drahtenden 14 der Spulen 10 gemäß Fig. 2 in Halteeinrichtüngen 32 an einer Auflageplatte 34 einführen, die in der Mitte eine Öffnung aufweist und damit auf die Lamellen 24 des Einziehwerkzeugteils 26, nach oben abnehmbar, aufgesetzt ist. Die Spulen 10 liegen auf der Platte 34, bis sie gemäß Fig. 3 von der Einziehvorrichtung in die Nuten eines Statorblechpakets 12 eingezogen worden sind.

Bei dem erwähnten einfachen Übertragungs- und Einziehwerkzeugteil 26' gemäß Fig. 2A kann die mit den Stäben 24' verbundene Grundplatte 34', auf der die vorgewickelten Spulen 10' während der Übertragung von der Wickel- zur Einziehvorrichtung auf liegen, ebenfalls mit Halteeinrichtungen 32 versehen sein und somit das Organ zum vorübergehenden Halten der Drahtenden 14 bilden. Die Halteeinrichtungen 32 können die Form von metallischen oder gummielastischen Klemmstellen oder eventuell auch nur von labyrinthartigen Aussparungen im Rand der Platte 34 bzw. 34' haben.

Während Fig. 2 die Situation an einer Wickelstation zeigt, ist in Fig. 3 die Situation an einer Einziehstation dargestellt. Der Einziehstern 28 ist hochgefahren, hat dabei die Spulen 10 mitgenommen und in ein Statorblechpaket eingezogen, und ist danach wieder zurückgezogen worden. Während des Einziehvorgangs ist durch die angeklemmten Drahtenden oder einen Hilfsgreifer die Platte 34 mit angehoben worden. Es versteht sich, daß im Einzelfall die Länge der Drahtenden 14 auch so groß gewählt werden kann, daß während des Einziehvorgangs die Platte 34 nicht mit angehoben wird. Sie kann auch durch einen anschließenden Formvorgang geschleust werden.

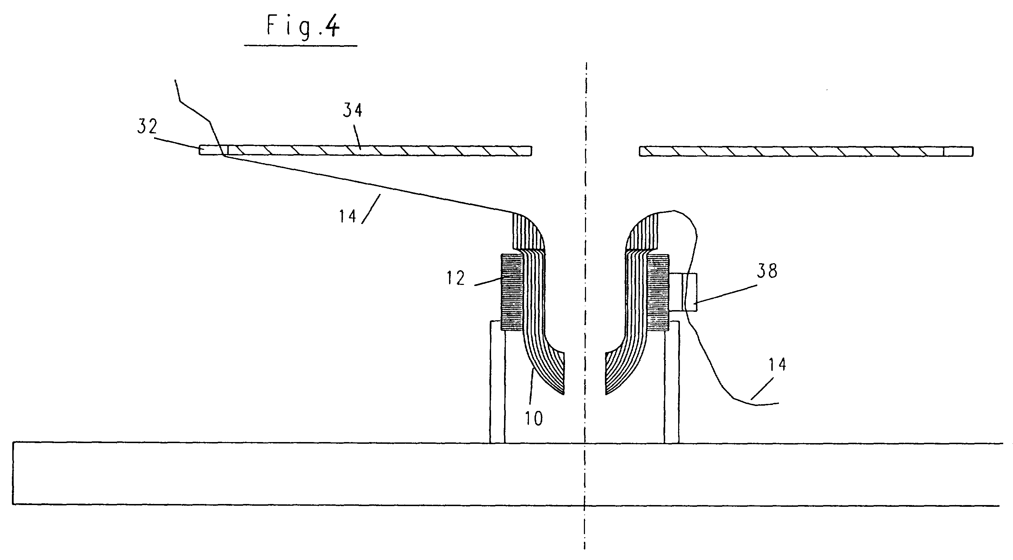

Im weiteren Arbeitsablauf bei der Herstellung eines Stators wird im Beispielsfall, nicht notwendigerweise, das Statorblechpaket mitsamt den eingezogenen Spulen und der Platte 34 mit der Unterseite nach oben gewendet. Die Wendeeinrichtung ist in Fig. 3 mit 36 bezeichnet. Durch das Wenden befindet sich die Platte 34 nunmehr oberhalb des Statorblechpakets. In dieser Lage können die Drahtenden 14, die jeweils durch die Halteeinrichtungen 32 in einer bestimmten Stellung gehalten sind, von einem nicht gezeigten Greifer erfaßt und gemäß Fig. 4 mit einem Terminal oder Hilfsterminal 38, das z. B. am Statorblechpaket oder an einer dieses tragenden Palette angebracht ist, verbunden werden. Anschließend kann die Auflageplatte 34 wieder auf ein leeres Übertragungs- und Einziehwerkzeugteil 26 aufgesetzt werden, und dann wiederholt sich der anhand der Figuren 2 bis 4 beschriebene Vorgang. Der bis zur Verbindung der Drahtenden mit elektrischen Terminals oder Hilfsterminals 38 fertige Stator geht aus Fig. 5 hervor.

## Patentansprüche

1. Verfahren zum Herstellen eines Stators für elektrische Maschinen, bei dem eine Vielzahl von Spulen (10) vorgewickelt und in ein Statorblechpaket (12) eingezogen wird und vor dem Einziehen die Drahtenden (14) der Spulen (10) in einer bestimmten, vor-ausgerichteten Stellung vorübergehend mit einem vom Statorblechpaket getrennten Halterorgan (32, 34, 34') verbunden und nach dem Einziehen in vorbestimmter Lage relativ zum Statorblechpaket festgelegt werden, **dadurch gekennzeichnet**, daß die Drahtenden (14) der Spulen (10) während des Einziehens mit dem Halteorgan (32, 34, 34') verbunden bleiben und nach dem Einziehen maschinell vom Halteorgan (32, 34, 34') gelöst und in die vorbestimmte, relativ zum Statorblechpaket festgelegte Lage überführt werden.

2. Verfahren nach Anspruch 1, **dadurch gekennzeichnet**, daß die Spulen (10) beim oder nach dem Wickeln auf ein Einziehwerkzeugteil (26, 26') mit ringförmig angeordneten, parallelen Lamellen (24) oder Stäben (24') und einer Auflageplatte (34, 34') für die Spulen (10) übertragen werden, welche das Halteorgan (32, 34, 34') bildet, mit dem die Drahtenden (14) vorübergehend verbunden werden.

3. Verfahren nach Anspruch 2, **dadurch gekennzeichnet**, daß nach dem Einziehen der Spulen (10) das Statorblechpaket (12) gewendet, die Auflageplatte (34, 34') nach oben abgehoben und die Drahtenden (14) vor oder nach dem Abheben maschinell erfaßt und in die festgelegte Lage überführt werden.

4. Verfahren nach Anspruch 1, **dadurch gekennzeichnet**, daß die Spulen (10) auf Stromdurchgang geprüft werden, während sich die Drahtenden (14) in der vor-ausgerichteten Stellung befinden.

5. Einziehwerkzeugteil zur Durchführung des Verfahrens nach Anspruch 1, welches auf einer Schablone gewickelte Spulen (10) zwischen ringförmig angeordneten, parallelen Lamellen (24) oder Stäben (24') aufnimmt und mit einer Einziehvorrichtung kuppelbar ist, durch die die Spulen (10) von den Lamellen (24) bzw. Stäben (24') in die Nuten eines Statorblechpakets (12) abstreifbar sind, **dadurch gekennzeichnet**, daß es eine Auflageplatte (34, 34') für die Spulen aufweist, an deren äußerem Umfang Halteeinrichtungen (32) zur lösbaren Verbindung mit den Drahtenden (14) der Spulen (10) angebracht sind.
